# EUROPEAN PATENT SPECIFICATION

(11) **EP 3 084 071 B1**
(45) Date of publication and mention of the grant of the patent: **08.08.2018**
(21) Application number: 14871933.9
(22) Date of filing: 15.12.2014
(51) Int. Cl.: D21C 9/06, B01D 33/073, D21C 9/18

(54) **PULP PRODUCTION ARRANGEMENT AND METHOD**
ZELLSTOFFHERSTELLUNGSANORDNUNG UND -VERFAHREN
AGENCEMENT ET PROCÉDÉ DE PRODUCTION DE PÂTE

(30) Priority: 19.12.2013 SE 1351529
(43) Date of publication of application: 26.10.2016
(73) Proprietor: Valmet Aktiebolag, 851 94 Sundsvall (SE)
(72) Inventor: MELLANDER, Stefan, SE-865 32 Alnö (SE); SVEDBERG, Peter, SE-865 33 Alnö (SE)
(74) Representative: Aros Patent AB
(86) International application number: PCT/SE2014/051495
(87) International publication number: WO 2015/094093

(56) References cited:
- WO-A1-00/79039
- WO-A1-87/06282
- WO-A1-96/36817
- WO-A1-2007/004968
- WO-A1-2009/075642
- WO-A1-2010/036192
- WO-A2-2004/101266
- DE-A1- 4 241 040
- US-A- 3 837 593
- US-A- 4 683 744
- US-A- 4 750 340
- US-A1- 2011 233 130

## Description

### TECHNICAL FIELD

The present document relates in general to fibre dewatering devices in pulp production and in particular to dewatering roll arrangements.

### BACKGROUND

In pulp production, fibres are caused to be suspended in a water solution by means of mechanical and/or chemical processes. The fibres are also washed at different point along the process. Therefore, in many stages along a pulp production line, there is a need for dewatering the pulp suspension. In a typical example, dewatering of the pulp may be performed from an inlet pulp concentration of 2-10 % by weight to an output pulp concentration of 20-50 % by weight.

One type of dewatering device is the twin-roll dewatering device. In such a device, the fibre suspension is brought into contact with the mantle plate of a roll. The mantle surface is typically perforated with dewatering channels in a relatively dense pattern. Two such rolls are rotated in opposite directions to bring the fibre suspension into a small gap between the rolls. The water is thereby pressed out from the suspension through the dewatering channels of the mantle plate and into flow paths within the structures of the rolls. The majority of the fibres remain outside the mantle and a pulp with much lower water content exits in the small gap on the other side. The dewatered liquid is typically transported axially along the rolls and exits the device in the vicinity of one or both of the roll ends.

The dewatering efficiency depends to a high degree on the nip between the rolls. In order to achieve a well-defined and efficient dewatering, it is advantageous to have the same load along the axial direction of the rolls within the nip section. However, since the force holding the rolls together is applied at the axial ends of the rolls and the load from the fibre suspension dewatering operation is spread over the entire length of the rolls, there will be a certain tendency of a bending of the rolls. The gap at the middle parts of the rolls will therefore be somewhat larger than the gap in the vicinity of the ends of the rolls. For short rolls, such bending of the rolls may be small enough to be neglected or at least acceptable. However, since the tendency is to provide longer and longer rolls in order to increase the put-through, such bending effects may be quite severe. In the middle part of the device, the dewatering efficiency will be reduced, and if the gap is generally decreased to mitigate such effects, the load at the rolls close to the ends becomes very high indeed, which may cause mechanical damage on the rolls. The high load is caused by a highly non-linear compressibility of the pulp. Washing and dewatering apparatuses for pulp are known from e.g. WO2007004968, US4750340 and WO2009075642. Similar effects are also present in e.g. paper machines. The typical approach for compensate for such effects is to perform a machining of the rolls in order to give a somewhat smaller roll radius close to the ends of the rolls and a larger radius in the middle. However, paper machine solutions are not applicable for pulp dewatering purposes, since the dewatering process takes place via a relatively thin mantle plate. The volume inside the mantle plate is used for allowing the liquid extracted from the fibre suspension to exit the device. Machining of a mantle plate of a fibre suspension dewatering roll will either decrease the mechanical strength of the mantle at the roll ends or require longer dewatering channels through the mantle plate in particular at the centre of the rolls, which is not acceptable.

### SUMMARY

A general object of the present technology is to provide devices and method for equalizing the nip against a dewatering roll along the axis of the dewatering roll. This object is achieved by devices and methods according to the attached independent patent claims. Preferred embodiments are defined in dependent claims. In general words, in a first aspect, a dewatering roll comprises a roll body, a mantle support structure and a mantle. The mantle support structure is attached, in a radial direction, around the roll body. The mantle is attached, in the radial direction, against an outer surface of the mantle support structure. The mantle has a plurality of through holes constituting mantle flow paths from an, in the radial direction, outer surface of the mantle to an, in the radial direction, inner surface of the mantle. The mantle support structure presents support flow paths from the outer surface of the mantle support structure. The support flow paths are in fluid contact with the mantle flow paths. The outer surface of the mantle support structure has a static geometric shape defining an envelope having a smaller radius in vicinity of each axial end of the mantle support structure than in vicinity of a centre of the mantle support structure. Thereby, the inner surface of the mantle assumes the shape of the envelope.

In a second aspect, a dewatering press comprises at least one dewatering roll according to the first aspect.

In a third aspect, a method for producing a dewatering roll, comprises providing of a mantle support structure with support flow paths from an, in a radial direction, outer surface of the mantle support structure. The mantle support structure is attached around a roll body. A mantle is provided with a plurality of through holes constituting mantle flow paths from an, in the radial direction, outer surface of the mantle to an, in the radial direction, inner surface of the mantle. The outer surface of the mantle support structure is formed to obtain a static geometric shape defining an envelope having a smaller radius in vicinity of each axial end of the mantle support structure than in vicinity of a centre of the mantle support structure. The mantle is fitted against the outer surface of the mantle support structure. The support flow paths are thereby brought in fluid contact with the mantle flow paths. The forming of the outer surface of the mantle support structure is performed before fitting the mantle against the outer surface of the mantle support structure.

One advantage with the presently presented technology is that a homogeneous load can be obtained along the entire length of a dewatering roll. Further advantages are presented in connection with the detailed description of different embodiments below.

### BRIEF DESCRIPTION OF THE DRAWINGS

The invention, together with further objects and advantages thereof, may best be understood by making reference to the following description taken together with the accompanying drawings, in which:
FIG. 1 is a schematic illustration of a twin roll press operation principle;
FIG. 2 is a schematic view of a part of an enlarged cross-sectional view of a dewatering roll;
FIG. 3 is a schematic illustration of forces on dewatering rolls;
FIG. 4 is a schematic illustration of forces on dewatering rolls in a cross-sectional view;
FIG. 5 is an illustration of dewatering rolls of an embodiment of a dewatering press;
FIG. 6 is a schematic illustration of an embodiment of an envelope of an outer surface of a mantel support structure;
FIG. 7 is a schematic illustration of an embodiment of a mantel support structure having linearly varying radiuses;
FIG. 8 is a schematic illustration of another embodiment of a mantel support structure having linearly varying radiuses; and
FIG. 9 is a flow diagram of steps of an embodiment of a method for manufacturing a dewatering roll.

### DETAILED DESCRIPTION

Throughout the drawings, the same reference numbers are used for similar or corresponding elements.

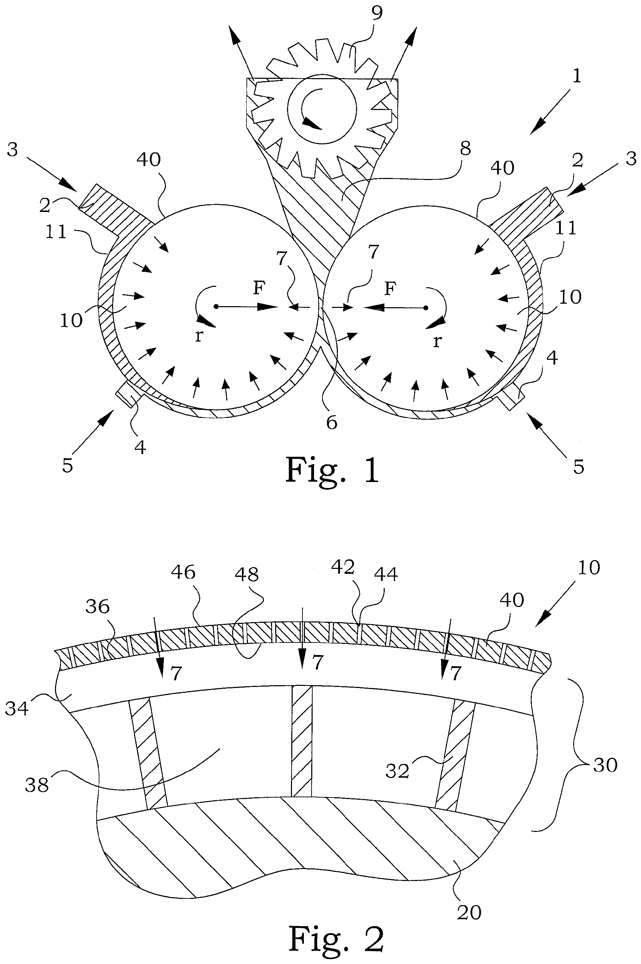

Since the present ideas are closely connected to the dewatering process of a dewatering roll, this process will first be described in somewhat more detail. Fig. 1 illustrates schematically a twin-roll press 1. The twin-roll press 1 comprises two dewatering rolls 10. Each dewatering roll 10 has a mantle 40, which is perforated by holes in a radial direction. The dewatering rolls 10 are rotating in opposite directions, indicated by the arrows r. Fibre suspension 3, e.g. pulp suspension, is entered by a suspension inlet 2 into an enclosing volume 11 provided around, in a tangential direction, at least a part of the respective dewatering roll 10. The enclosing volumes 11 of the two dewatering rolls 10 are merging close to a nip section 6 between the dewatering rolls 10. The dewatering rolls are positioned at a predetermined distance from each other, leaving a gap within the nip section 6.

The suspension 3 entered into the enclosing volume 11 is transported by the rotation of the dewatering rolls 10 along in the rotation. Most of the free liquids of the suspension 3 entered into the enclosing volume 11 can during this transportation pass through, indicated by arrows 7, the holes of the mantle 40, due to the vat pressure used when entering the suspension 3. When the suspension 3 reaches the nip section 6, the volumes is reduced and the suspension will be exposed for a load, pressing the suspension towards the mantles 40 of the dewatering rolls 10. In order to maintain this load, the dewatering rolls are pushed towards each other with a force F. This pressing squeezes the filtrate out of the fibre suspension. A large portion of the remaining liquids in the suspension is thereby forced through the holes of the mantle 40. Typically, about 70-95 % of the input liquids can be removed in this way, leaving a pulp with a consistency of about 30%. A fibre-containing material 8 is provided at the exit from the nip section, which is transported away by suitable transportation means 9.

In embodiments where the dewatering process is required to be combined with a washing procedure, a washing liquid 5 can be introduced through a wash liquid inlet 4 into the enclosing volume 11 for displacing "dirty" liquids from the suspension. Note, however, that this washing step is optional.

Fig. 2 illustrates a part of a dewatering roll 10 in a cross-sectional view. The mantle 40 has a large number of through holes 42 constituting mantle flow paths 44 for liquids passing 7 through the mantle 40 from an outer surface 46 into the interior of the dewatering roll 10. The mantle 40 is supported by a mantle support structure 30, in this embodiment comprising ring elements 34 attached on support ribs 32 provided in an axial direction. The mantle 40 is fitted with an inner surface 48 against an outer surface 36 of the mantle support structure 30. The mantle support structure 30 is in turn attached to a roll body 20. The liquids resulting from the dewatering process are thus provided into the interior of the dewatering roll 10 inside the mantle 40. The mantle 40 is relatively thin in order to provide low flow resistance through the mantle flow paths 44. Once the liquids exit the mantle flow paths 44, they enter into support flow paths 38 provided by the geometrical structure of the mantle support structure 30. In this embodiment, there are radially directed part flow paths between the ring elements 34 flowing into axially directed part flow paths between the support ribs 32. The support flow paths 38 are thus in fluid contact with the mantle flow paths 44.

In alternative embodiments, the support flow paths could be provided in other ways. The support flow paths 38 could in one alternative e.g. have an axial flow direction in the volumes that are in direct contact with the mantle flow paths. In another alternative embodiment, the support flow paths 38 could have a substantially radial flow direction, delivering the liquids from the mantle inwards towards the axis of the roll body. The roll body could then be arranged for receiving the dewatering liquids, e.g. by channels through the roll body surface, and remove the dewatering liquids from the system, e.g. through a hollow roll body.

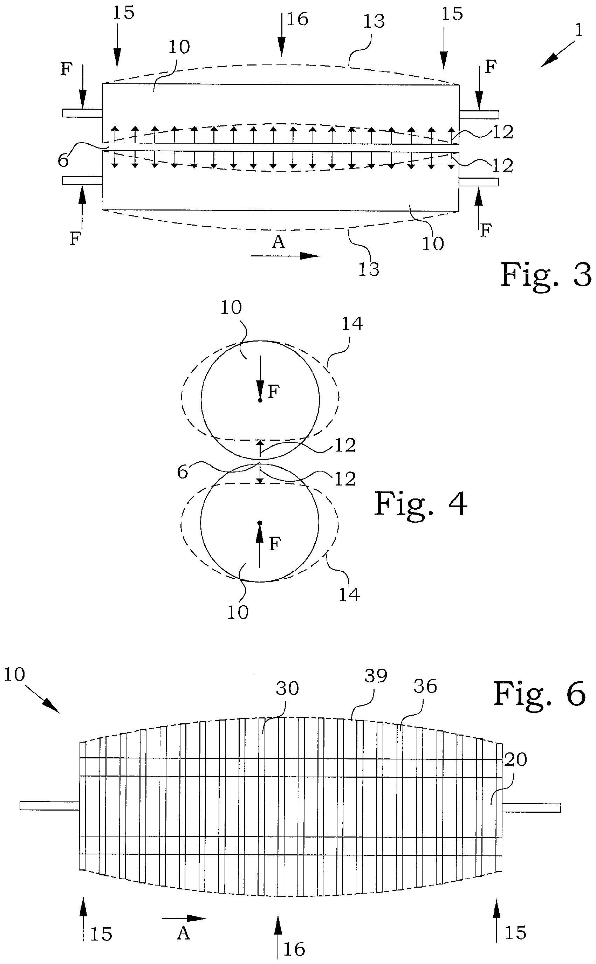

Fig. 3 illustrates schematically a twin-roll press 1, in which two dewatering rolls 10 are pressed together by forces F. The fibre suspension in the nip section 6 applies a load, illustrates by the arrows 12 onto the dewatering rolls 10 in a direction out from the nip section 6 perpendicular to the direction of the axes of the dewatering rolls 10. The load 12 causes the dewatering rolls 10 to bend, which is illustrated (extremely exaggerated) by the dotted line 13. The bending is largest in the middle part 16 of the dewatering rolls 10, in an axial direction A. Since the forces F are applied to the ends of the dewatering rolls 10, the deviation from the perfectly straight shape is smallest closest to an end part 15 of the dewatering rolls 10, in an axial direction A. This results in, as briefly mentioned in the background, a less efficient dewatering in the central part of the arrangement. If a washing procedure is utilized, the efficiency of the washing also becomes reduced. Thus, the result is a pulp material with a higher liquid content with a higher content of impurities.

Furthermore, the deflection of the dewatering rolls 10 also influences the local load on the dewatering rolls 10. It has been found in experiments that the local load close to the ends 15 of the dewatering rolls 10 increases whereas the local load in the middle 16 of the dewatering rolls 10 decreases. Since the relationship between actual gap size and local load is highly non-linear, the load close to the ends 15 of the dewatering rolls 10 may increase considerably, thereby increasing the risk for overloading the mantle.

A deformation of the dewatering rolls is also present in the cross-sectional direction. Fig. 4 schematically illustrates a twin-roll press 1, in which two dewatering rolls 10 are pressed together by forces F. The load 12 in the nip section 6 causes the dewatering rolls 10 to deform their cross-sections, illustrated in an extremely exaggerated way by the dotted line 14.

A straight-forward approach in e.g. paper machines to solve analogous problems is to machine the outer surface of the rolls to assume a slightly differing radius along the axis of the roll. However, in dewatering applications, such approach is not easily achieved. The reason is the dewatering process itself. In a dewatering arrangement, the mantle is perforated to provide mantle flow paths. In order to facilitate the dewatering, the aspect ratio of the hole length to hole diameter has to be kept as low as possible. It is therefore advantageous to have a thin mantle plate. A typical thickness is around 3 mm. For long and slender dewatering rolls deflections caused by the load can be in the order of several millimetres. A machining of the mantle plate thereby becomes impossible. Also, using a thick mantle plate that would allow machining depths of a couple of millimetres will instead give rise to mantle flow paths with too high flow resistance.

Within the paper production industry, there are also arrangements providing paper rolls with adjustable mantle shapes. Heat, as in e.g. the published European patent application EP 0 471 655, or hydraulic pressure, as in the published international patent application WO 96/36817, are used for changing the shape of the paper roll. However, such solutions are not possible to transfer to pulp dewatering applications since heat or hydraulic arrangements within the interior of the rolls severely would interfere with the dewatering function and dewatering flow channels.

The basic solution according to the present invention is based on the idea of leaving the mantle thickness essentially unmodified, but instead provide a static mantle support structure that has the required deflection measures.

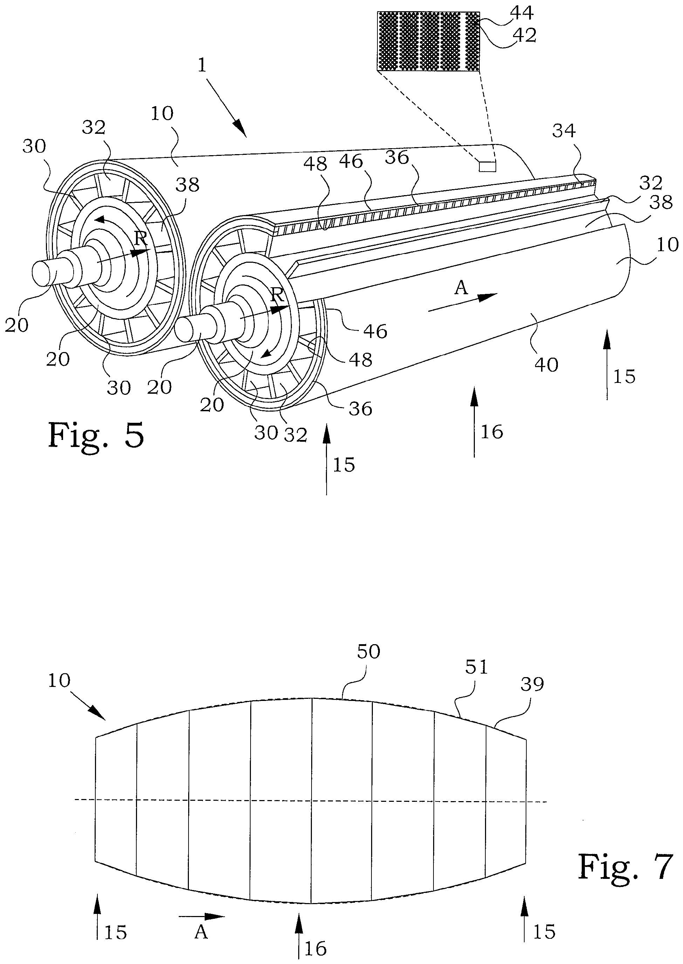

Fig. 5 illustrates one embodiment of a dewatering press, in this embodiment a twin roll press 1 with two dewatering rolls 10. Each of the dewatering rolls comprises a roll body 20, a mantle support structure 30 and a mantle 40. The mantle support structure 30 is attached, in a radial direction R, around the roll body 20. The mantle 40 is attached, in the radial direction R, against an outer surface 36 of the mantle support structure 30. The mantle 40 has a plurality of through holes 42 constituting mantle flow paths 44 from an, in the radial direction R, outer surface 46 of the mantle 40 to an, in the radial direction R, inner surface 48 of the mantle 40. The mantle support structure 30 presents support flow paths 38 from the outer surface 36 of the mantle support structure 30. The support flow paths 38 are in fluid contact with the mantle flow paths 44.

In order to supply a high throughput, the structure of the mantle support structure 30 should be as open as possible without any unnecessary disturbing parts. The open structure preferably provides flow paths of low flow resistance. As the person skilled in the art understands, the exact geometrical composition of the mantle support structure 30 can, however, be varied in very different manners. The contact area between the mantle support structure 30 and the mantle 40 has to be kept relatively small, in order to allow the connection of the support flow paths 38 and the mantle flow paths 44. In a typical case, the contact surface is less than 1/3 of the mantle surface. However, the actual contact surface pattern can be designed in different ways. In the embodiment of Fig. 5, the contact is provided in circular paths around the roll body 20. In other embodiments, contacts directed in an axial direction or as helical structures can also be used. Also, contact patterns of mesh types are feasible. The actual pattern of the contact surface is, however, not influencing the basic technical effect of the here presented technology as long as a good connection of the support flow paths 38 and the mantle flow paths 44 is provided.

Similarly, the mantle flow paths 44 can in different embodiments also be designed in different ways. Non-exclusive example can e.g. be different types of slits or holes with circular or non-circular cross-sections.

Again with reference to the embodiment of Fig. 5, the outer surface 36 of the mantle support structure 30 has a static geometric shape defining an envelope having a smaller radius in vicinity of each axial end 15 of the mantle support structure 30 than in vicinity of a centre 16 of the mantle support structure 30. Thereby, the inner surface 48 of the mantle assumes the shape of that envelope. In a preferred embodiment, the mantle has an essentially uniform thickness in the radial direction.

Fig. 6 illustrates schematically an embodiment of a dewatering roll 10 with the mantle removed. The mantle support structure 30 has an outer surface 36 with a geometric shape. This geometric shape defines an envelope 39 connecting the outer surface 36 parts. This envelope 39 thus corresponds to the shape the mantle assumes when being fitted onto the mantle support structure 30. The envelope 39 has a smaller radius in vicinity of each axial end 15 of the mantle support structure 30 than in vicinity of a centre 16 of the mantle support structure 30. Note, that this changing radius is extremely exaggerated in Fig. 6, in order to be visualized. In an actual device, the difference is typically in the order of a fraction of a millimeter up to a couple of millimeters, whereas the dewatering roll 10 length typically is from 0.5 m up to more than 10 m. In the embodiment of Fig. 6, a radius of the envelope 39 is changing monotonously from the centre 16 of the mantle support structure 30 towards each of the axial ends 15 of the mantle support structure 30. The envelope 39 is thus preferably given a shape that compensates for deflection and deformation of the dewatering roll 10 at a pre-defined operation load. When being in operation, the changing radius and the deflection and deformation will ideally cancel each other and a more or less constant gap is provided in the nip section.

Depending on e.g. the distribution of forces, there might be situations where the radius of the envelope 39 is not changing monotonously all the way from the centre 16. However, in most embodiments, the radius of the envelope 39 is changing monotonously over a major part of the distance from the centre 16 of the mantle support structure 30 towards each of the axial ends 15 of the mantle support structure 30.

In the embodiment of Fig. 5, the dewatering press is a twin roll press 1, where both the dewatering rolls 10 are provided with the changing radius according to Fig. 6. However, in an alternative embodiment, one of the dewatering rolls could be manufactured according to prior-art as a straight roll, whereas the other dewatering roll could be given a changing radius compensating for the deflection and deformation of both dewatering rolls. This will give rise to a nip section that is slightly bent between the dewatering rolls, but any disadvantages of having such a bent nip section are expected to be very small. In such a way, the deflection compensation only has to be performed on one of the dewatering rolls, thereby saving production time and complexity.

A dewatering press may also be designed only having one dewatering roll. In such a dewatering press, the counteracting surface can be a non-dewatering roll or more or less any relatively flat surface. The same principles about deflection compensation of the dewatering roll can, however, by advantage also be used in such dewatering presses.

In a typical industrial dewatering press, small deviations from a perfect constant gap between the dewatering rolls are acceptable. In typical prior art arrangements, deviations of up to 0.2-1 mm on the gap, i.e. 0.1-0.5 mm in radial difference for each roll in a twin-roll arrangement, are typically considered as neglectable concerning impact on dewatering efficiency and increased end load. The impact of the present ideas on systems having deflection less than 0.5 mm from an ideal straight shape is thus limited. However, envelopes that are given a shape having a radius in the centre, in the axial direction, that is at least 0.5 mm larger than a radius close to an axial end of the mantle support structure, will in many cases have a significant impact on the quality of the dewatering process.

This acceptable deviance from a perfectly compensated deflection also opens up for different shapes of the envelope. The envelope shape can thereby be modified from the ideal deflection compensation shape without causing any significant disadvantages. Typically, in test experiments, if the resulting gap of a twin-roll arrangement varies less than 0.2 mm, almost no reduction in dewatering efficiency can be detected. If the resulting gap varies less than 1 mm, the effect on the dewatering efficiency is still small, however, noticeable. Also resulting gap varying less than 2 mm could be used, at least if the absolute measure of the gap is relatively wide.

These allowed deviances from a perfect compensated shape open up for using simpler shapes for the envelope, which simpler shapes are easier to manufacture and/or control. In particular embodiments, the radius of the envelope is manufactured to vary piecewise linearly in the axial direction. In Fig. 7, an envelope 39 of a mantle support structure is schematically depicted. In this embodiment, the radius of the envelope 39 decreases piecewise linearly in the axial direction A from the centre 16 of the mantle support structure towards each of the axial ends 15 of the mantle support structure. In other words, the envelope consists of linearly varying sections 51, connected to each other at the ends thereof. By selecting the widths and slopes of these linearly varying sections 51 in a suitable manner, the difference in radius compared to an ideal deflection compensating curve 50 can be kept very small. Note that the illustrated changes in radius are extremely exaggerated.

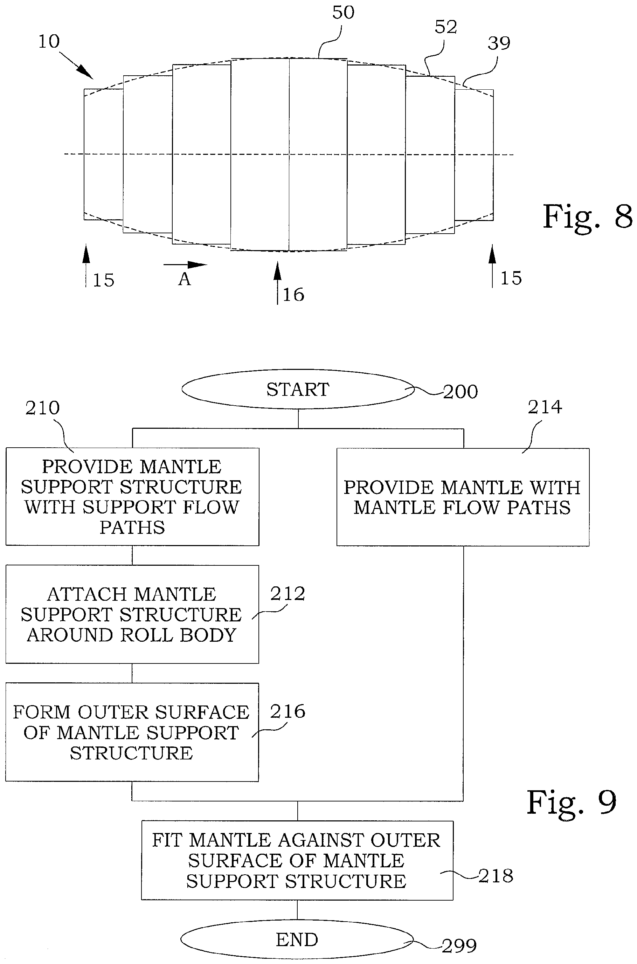

In Fig. 8, an envelope 39 of a mantle support structure of another embodiment is schematically depicted. Also in this embodiment, the radius of the envelope is manufactured to be piecewise linearly in the axial direction. In this embodiment, the radius of the envelope 39 is piecewise constant in the axial direction A. In other words, the envelope consists of sections 52 having a constant radius. The sections 52 are connected to each other at the ends thereof, thereby creating a step in the radius. By selecting the widths and step sizes of these sections 52 in a suitable manner, the difference in radius compared to an ideal deflection compensating curve 50 can anyway be kept very small. Note that the illustrated changes in radius are extremely exaggerated.

Fig. 9 illustrated a flow diagram of steps of an embodiment of a method for producing a dewatering roll. The procedure starts in step 200. In step 210 a mantle support structure is provided with support flow paths from an, in a radial direction, outer surface of the mantle support structure. In step 212, the mantle support structure is attached around a roll body. In step 214, a mantle is provided with a plurality of through holes. The through holes constitute mantle flow paths from an, in the radial direction, outer surface of the mantle to an, in the radial direction, inner surface of the mantle. In step 216, the outer surface of the mantle support structure is formed to obtain a static geometric shape defining an envelope having a smaller radius in vicinity of each axial end of the mantle support structure than in vicinity of a centre of the mantle support structure. In step 218, occurring after step 216, the mantle is fitted against the outer surface of the mantle support structure. The support flow paths are thus brought in fluid contact with the mantle flow paths. The procedure ends in step 299.

In this particular embodiment, the step of fitting 218 the mantle against the outer surface of the mantle support structure is performed by shrink-fitting. The mantle is typically provided with an inner radius that is somewhat smaller than the smallest radius of the portion of the mantle support structure it is intended to cover. The mantle is heated, whereby it expands. During this elevated temperature, the mantle is fitted around the mantle support structure and is then allowed to cool down. By means of the accompanied shrinking of the mantle, the mantle will be shrink-fitted onto the mantle support structure. This means that the inner surface of the mantle assumes the shape of the envelope as a result of the shrink-fitting.

In a particular embodiment, the mantle is fitted onto the mantle support structure in sections, whereby the original radius of the mantle is adapted to the respective mantle support structure section. If the changes in radius within such a mantle support structure section is moderate, the mantle can be originally provided before the shrink-fitting with a constant radius, whereby the shrink-fitting will cause the mantle to assume a shape similar to the envelope.

It is in alternative embodiment possible to provide the mantle already from the beginning with the required variation in radius. In other words, the step of providing a mantle then comprises shaping the mantle to by its inner surface assume the shape of the envelope. The mantle can then be stuck onto the mantle support structure and attached by any appropriate means. In such an embodiment, it is preferred to have the mantle divided in at least two part section, which can be slipped onto the mantle support structure from opposite directions, since the mantle support structure is widest in the middle.

## Claims

1. A dewatering roll (10), comprising
a roll body (20);
a mantle support structure (30), attached, in a radial direction (R), around said roll body (20); and
a mantle (40), attached, in said radial direction (R), against an outer surface (36) of said mantle support structure (30);
said mantle (40) having a plurality of through holes (42) constituting mantle flow paths (44) from an, in said radial direction (R), outer surface (46) of said mantle (40) to an, in said radial direction (R), inner surface (48) of said mantle (40);
said mantle support structure (30) presenting support flow paths (38) from said outer surface (36) of said mantle support structure (30), said support flow paths (38) being in fluid contact with said mantle flow paths (44),
**characterized in that**
said outer surface (36) of said mantle support structure (30) has a static geometric shape defining an envelope (39) having a smaller radius in vicinity of each axial end (15) of said mantle support structure (30) than in vicinity of a centre (16) of said mantle support structure (30), whereby said inner surface (48) of said mantle (40) assumes the shape of said envelope (39).

2. The dewatering roll according to claim 1, **characterized in that** said envelope (39) is given a shape compensating for deflection and deformation of said dewatering roll (10) at a pre-defined operation load.

3. The dewatering roll according to claim 2, **characterized in that** said envelope (39) is given a shape having a radius in the centre (16), in an axial direction (A), that is at least 0.5 mm larger than a radius close to an axial end (15) of said mantle support structure (30).

4. The dewatering roll according to any of the claims 1 to 3,
**characterized in that** a radius of said envelope (39) is changing monotonously over a major part of the distance from said centre (16) of said mantle support structure (30) towards each of said axial ends (15) of said mantle support structure (30).

5. The dewatering roll according to claim 4, **characterized in that** a radius of said envelope (39) is changing monotonously from said centre (16) of said mantle support structure (30) towards each of said axial ends (15) of said mantle support structure (30).

6. The dewatering roll according to any of the claims 1 to 5,
**characterized in that** said radius of said envelope (39) varies piecewise linearly in said axial direction (A).

7. The dewatering roll according to claim 6, **characterized in that** said radius of said envelope (39) decreases piecewise linearly in said axial direction (A) from said centre (16) of said mantle support structure (30) towards each of said axial ends (15) of said mantle support structure (30).

8. The dewatering roll according to any of the claims 1 to 5,
**characterized in that** said radius of said envelope (39) is piecewise constant in said axial direction (A).

9. The dewatering roll according to any of the claims 1 to 8,
**characterized in that** said mantle (40) has an essentially uniform thickness in said radial direction (R).

10. A dewatering press (1) comprising at least one dewatering roll (10) according to any of the claims 1 to 9.

11. The dewatering press according to claim 10, **characterized in that** the dewatering press (1) comprises two dewatering rolls (10) according to any of the claims 1 to 8, arranged side by side parallel to each other.

12. A method for producing a dewatering roll, comprising the steps of:
providing (210) a mantle support structure with support flow paths from an, in a radial direction, outer surface of said mantle support structure;
attaching (212) said mantle support structure around a roll body;
providing (214) a mantle with a plurality of through holes constituting mantle flow paths from an, in said radial direction, outer surface of said mantle to an, in said radial direction, inner surface of said mantle;
fitting (218) said mantle against said outer surface of said mantle support structure;
whereby said support flow paths is brought in fluid contact with said mantle flow paths,
**characterized by** the further step of:
forming (216), before said step of fitting (218), said outer surface of said mantle support structure to obtain a static geometric shape defining an envelope having a smaller radius in vicinity of each axial end of said mantle support structure than in vicinity of a centre of said mantle support structure.

13. The method according to claim 12, **characterized in that** said step of fitting (218) said mantle against said outer surface of said mantle support structure is performed by shrink-fitting whereby said inner surface of said mantle assumes the shape of said envelope by said shrink-fitting.

14. The method according to claim 12, **characterized in that** said step of providing (214) a mantle comprises shaping said mantle so that its inner surface assumes the shape of said envelope.

## Patentansprüche

1. Entwässerungswalze (10), umfassend
einen Walzenkörper (20);
eine Mantelstützstruktur (30), die in einer radialen Richtung (R) um den Walzenkörper (20) befestigt ist; und
einen Mantel (40), der in der radialen Richtung (R) an einer Außenfläche (36) der Mandelstützstruktur (30) befestigt ist;
wobei der Mantel (40) eine Vielzahl von Durchgangslöchern (42) aufweist, die Mantelflusswege (44) von einer, in der radialen Richtung (R), Außenfläche (46) des Mantels (40) zu einer, in der radialen Richtung (R), Innenfläche (48) des Mantels (40) darstellen;
wobei die Mantelstützstruktur (30) Stützflusswege (38) von der Außenfläche (36) der Mantelstützstruktur (30) aufweist, wobei die Stützflusswege (38) in Fluidverbindung mit den Mantelflusswegen (44) stehen,
**dadurch gekennzeichnet, dass**
die Außenfläche (36) der Mantelstützstruktur (30) eine statische geometrische Form aufweist, die eine Hülle (39) mit einem kleineren Radius in der Nähe von jedem axialen Ende (15) der Mantelstützstruktur (30) als in der Nähe eines Mittelpunkts (16) der Mantelstützstruktur (30) aufweist, wobei die Innenfläche (48) des Mantels (40) die Form der Hülle (39) annimmt.

2. Entwässerungswalze nach Anspruch 1, **dadurch gekennzeichnet, dass** der Hülle (39) eine Form gegeben wird, die die Ablenkung und Verformung der Entwässerungsrolle (10) bei einer vorbestimmten Betriebslast ausgleicht.

3. Entwässerungswalze nach Anspruch 2, **dadurch gekennzeichnet, dass** der Hülle (39) eine Form mit einem Radius an dem Mittelpunkt (16) gegeben wird, in einer axialen Richtung (A), der mindestens 0,5 mm größer ist als ein Radius, der einem axialen Ende (15) der Mantelstützstruktur (30) nahesteht.

4. Entwässerungswalze nach einem der Ansprüche 1 bis 3, **dadurch gekennzeichnet, dass** sich ein Radius der Hülle (39) über einen großen Teil des Abstands von dem Mittelpunkt (16) der Mantelstützstruktur (30) zu jedem der axialen Enden (15) der Mantelstützstruktur (30) monoton verändert.

5. Entwässerungswalze nach Anspruch 4, **dadurch gekennzeichnet, dass** sich ein Radius der Hülle (39) von dem Mittelpunkt (16) der Mantelstützstruktur (30) zu jedem der axialen Enden (15) der Mantelstützstruktur (30) monoton verändert.

6. Entwässerungswalze nach einem der Ansprüche 1 bis 5, **dadurch gekennzeichnet, dass** der Radius der Hülle (39) in der axialen Richtung (A) stückweise linear variiert.

7. Entwässerungswalze nach Anspruch 6, **dadurch gekennzeichnet, dass** sich der Radius der Hülle (39) von dem Mittelpunkt (16) der Mantelstützstruktur (30) zu jedem der axialen Enden (15) der Mantelstützstruktur (30) in der axialen Richtung (A) stückweise linear verringert.

8. Entwässerungswalze nach einem der Ansprüche 1 bis 5, **dadurch gekennzeichnet, dass** der Radius der Hülle (39) in der axialen Richtung (A) stückweise konstant ist.

9. Entwässerungswalze nach einem der Ansprüche 1 bis 8, **dadurch gekennzeichnet, dass** der Mantel (40) in der radialen Richtung (R) eine im Wesentlichen uniforme Dicke aufweist.

10. Entwässerungspresse (1), umfassend mindestens eine Entwässerungswalze (10) nach einem der Ansprüche 1 bis 9.

11. Entwässerungspresse nach Anspruch 10, **dadurch gekennzeichnet, dass** die Entwässerungspresse (1) zwei Entwässerungswalzen (10) nach einem der Ansprüche 1 bis 8 umfasst, die nebeneinander parallel zueinander angeordnet sind.

12. Verfahren zum Herstellen einer Entwässerungswalze, umfassend die folgenden Schritte:
Bereitstellen (210) einer Mantelstützstruktur mit Stützflusswegen von einer, in einer radialen Richtung, Außenfläche der Mantelstützstruktur;
Befestigen (212) der Mantelstützstruktur um einen Walzenkörper;
Bereitstellen (214) eines Mantels mit einer Vielzahl von Durchgangslöchern, die Mantelflusswege von einer, in der radialen Richtung, Außenfläche des Mantels zu einer, in der radialen Richtung, Innenfläche des Mantels darstellt;
Anpassen (218) des Mantels an die Außenfläche der Mantelstützstruktur;
wobei die Stützflusswege in Fluidkontakt mit den Mantelflusswegen gebracht werden,
**gekennzeichnet durch** den folgenden weiteren Schritt:
Bilden (216), vor dem Anpassungsschritt (218), der Außenfläche der Mantelstützstruktur, um eine statische geometrische Form zu erhalten, die eine Hülle mit einem kleineren Radius in der Nähe von jedem axialen Ende der Mantelstützstruktur als in der Nähe eines Mittelpunkts der Mantelstützstruktur aufweist.

13. Verfahren nach Anspruch 12, **dadurch gekennzeichnet, dass** der Schritt des Anpassens (218) des Mantels an die Außenfläche der Mantelstützstruktur durch Aufschrumpfen durchgeführt wird, wobei die Innenfläche des Mantels durch das Aufschrumpfen die Form der Hülle annimmt.

14. Verfahren nach Anspruch 12, **dadurch gekennzeichnet, dass** der Schritt des Bereitstellens (214) eines Mantels die Formgebung des Mantels umfasst, so dass seine Innenfläche die Form des Mantels annimmt.

## Revendications

1. Rouleau de déshydratation (10), comprenant
un corps de rouleau (20) ;
une structure de support de manteau (30), fixée, dans une direction radiale (R), autour dudit corps de rouleau (20) ; et
un manteau (40), fixé, dans ladite direction radiale (R), contre une surface externe (36) de ladite structure de support de manteau (30) ;
ledit manteau (40) ayant une pluralité de trous traversants (42) constituant des chemins d'écoulement de manteau (44) à partir, dans ladite direction radiale (R), d'une surface externe (46) dudit manteau (40) jusqu'à, dans ladite direction radiale (R), une surface interne (48) dudit manteau (40) ;
ladite structure de support de manteau (30) présentant des chemins d'écoulement de support (38) à partir de ladite surface externe (36) de ladite structure de support de manteau (30), lesdits chemins d'écoulement de support (38) étant en contact fluidique avec lesdits chemins d'écoulement de manteau (44),
**caractérisé en ce que**
ladite surface externe (36) de ladite structure de support de manteau (30) a une forme géométrique statique définissant une enveloppe (39) ayant un rayon plus petit à proximité de chaque extrémité axiale (15) de ladite structure de support de manteau (30) qu'à proximité d'un centre (16) de ladite structure de support de manteau (30), de sorte que ladite surface interne (48) dudit manteau (40) prend la forme de ladite enveloppe (39).

2. Rouleau de déshydratation selon la revendication 1,
**caractérisé en ce que** ladite enveloppe (39) reçoit une forme qui compense la déflexion et la déformation dudit rouleau de déshydratation (10) à une charge de fonctionnement prédéfinie.

3. Rouleau de déshydratation selon la revendication 2,
**caractérisé en ce que** ladite enveloppe (39) reçoit une forme ayant un rayon au centre (16), dans une direction axiale (A), qui est supérieur d'au moins 0,5 mm à un rayon proche d'une extrémité axiale (15) de ladite structure de support de manteau (30).

4. Rouleau de déshydratation selon l'une quelconque des revendications 1 à 3, **caractérisé en ce qu'**un rayon de ladite enveloppe (39) change de façon monotone sur une grande partie de la distance à partir dudit centre (16) de ladite structure de support de manteau (30) vers chacune desdites extrémités axiales (15) de ladite structure de support de manteau (30).

5. Rouleau de déshydratation selon la revendication 4,
**caractérisé en ce qu'**un rayon de ladite enveloppe (39) change de façon monotone à partir dudit centre (16) de ladite structure de support de manteau (30) vers chacune desdites extrémités axiales (15) de ladite structure de support de manteau (30).

6. Rouleau de déshydratation selon l'une quelconque des revendications 1 à 5, **caractérisé en ce que** ledit rayon de ladite enveloppe (39) varie linéairement par morceaux dans ladite direction axiale (A).

7. Rouleau de déshydratation selon la revendication 6,
**caractérisé en ce que** ledit rayon de ladite enveloppe (39) diminue linéairement par morceaux dans ladite direction axiale (A) à partir dudit centre (16) de ladite structure de support de manteau (30) vers chacune desdites extrémités axiales (15) de ladite structure de support de manteau (30).

8. Rouleau de déshydratation selon l'une quelconque des revendications 1 à 5, **caractérisé en ce que** ledit rayon de ladite enveloppe (39) est constant par morceaux dans ladite direction axiale (A).

9. Rouleau de déshydratation selon l'une quelconque des revendications 1 à 8, **caractérisé en ce que** ledit manteau (40) a une épaisseur sensiblement uniforme dans ladite direction radiale (R) .

10. Presse de déshydratation (1) comprenant au moins un rouleau de déshydratation (10) selon l'une quelconque des revendications 1 à 9.

11. Presse de déshydratation selon la revendication 10, **caractérisée en ce que** la presse de déshydratation (1) comprend deux cylindres de déshydratation (10) selon l'une quelconque des revendications 1 à 8, disposés côte à côte parallèlement l'un à l'autre.

12. Procédé de production d'un rouleau de déshydratation, comprenant les étapes de :
fourniture (210) d'une structure de support de manteau avec des chemins d'écoulement de support à partir, dans une direction radiale, d'une surface externe de ladite structure de support de manteau ;
fixation (212) de ladite structure de support de manteau autour d'un corps de rouleau ;
fourniture (214) d'un manteau avec une pluralité de trous traversants constituant des chemins d'écoulement de manteau à partir, dans ladite direction radiale, d'une surface externe dudit manteau jusqu'à, dans ladite direction radiale, une surface interne dudit manteau ;
raccord (218) dudit manteau contre ladite surface externe de ladite structure de support de manteau ;
de sorte que lesdits chemins d'écoulement de support sont amenés en contact fluidique avec lesdits chemins d'écoulement de manteau,
**caractérisé par** l'étape supplémentaire de :
formation (216), avant ladite étape de raccord (218), de ladite surface externe de ladite structure de support de manteau pour obtenir une forme géométrique statique définissant une enveloppe ayant un rayon plus petit à proximité de chaque extrémité axiale de ladite structure de support de manteau qu'à proximité d'un centre de ladite structure de support de manteau.

13. Procédé selon la revendication 12, **caractérisé en ce que** ladite étape de raccord (218) dudit manteau contre ladite surface externe de ladite structure de support de manteau est réalisée par frettage de sorte que ladite surface interne dudit manteau prend la forme de ladite enveloppe par ledit frettage.

14. Procédé selon la revendication 12, **caractérisé en ce que** ladite étape de fourniture (214) d'un manteau comprend la mise en forme dudit manteau de sorte que sa surface interne prend la forme de ladite enveloppe.
